# EUROPÄISCHE PATENTSCHRIFT

(11) **EP 3 877 171 B1**
(45) Veröffentlichungstag und Bekanntmachung des Hinweises auf die Patenterteilung: **03.08.2022**
(21) Anmeldenummer: 19795585.9
(22) Anmeldetag: 05.11.2019
(51) Int. Cl.: B32B 5/26, B32B 5/28, B29C 70/08, B29C 70/40

(54) **VERFAHREN ZUR HERSTELLUNG EINES THERMOPLASTISCH VERFORMBAREN FASERVERSTÄRKTEN FLÄCHIGEN HALBZEUGS**
METHOD FOR PRODUCING A THERMOPLASTICALLY DEFORMABLE FIBRE-REINFORCED FLAT SEMI-FINISHED PRODUCT
PROCÉDÉ DE FABRICATION D'UN DEMI-PRODUIT PLAN RENFORCÉ PAR DES FIBRES POUVANT ÊTRE DÉFORMÉ DE MANIÈRE THERMOPLASTIQUE

(30) Priorität: 05.11.2018 EP 18204437; 10.01.2019 EP 19151243
(43) Veröffentlichungstag der Anmeldung: 15.09.2021
(73) Patentinhaber: Mitsubishi Chemical Advanced Materials Composites AG, 5600 Lenzburg (CH)
(72) Erfinder: SCHIMANSKI, Tilo, 5742 Kölliken (CH); BASKARAN, Gautham Kumar, 5600 Lenzburg (CH)
(74) Vertreter: Schmauder & Partner AG Patent- & Markenanwälte VSP
(86) Internationale Anmeldenummer: PCT/EP2019/080297
(87) Internationale Veröffentlichungsnummer: WO 2020/094671

(56) Entgegenhaltungen:
- WO-A1-2006/133586
- WO-A1-2018/185090

## Beschreibung

### Technisches Gebiet

Die vorliegende Erfindung betrifft ein Verfahren zur Herstellung eines thermoplastisch verformbaren faserverstärkten flächigen Halbzeugs. Zudem betrifft die Erfindung ein Verfahren zur anschliessenden Herstellung eines flächiges Verbundbauteils.

### Stand der Technik

Verbundbauteile aus faserverstärkten Thermoplasten werden in zunehmendem Mass als Formteile in verschiedenen Bereichen der Technik eingesetzt.

Beispielsweise beschreibt die WO 2015/117799A1 ein Verbundbauteil mit einem Schaumkern, auf dessen Oberfläche beidseitig eine stoffschlüssig mit dem Schaumkern verbundene Deckschicht angeordnet ist. Zur Herstellung des Verbundbauteils werden die Deckschichten und der Schaumkern erwärmt, danach werden die Deckschichten auf den Oberflächen des Schaumkerns positioniert und das Ganze in eine Presse oder Form gebracht, die das fertige Verbundbauteil abbildet. Das Erwärmen kann auch erst in der Form erfolgen. Anschliessend werden Schaumkern und Deckschichten umgeformt und nach einer bestimmten Umformzeit wieder abgekühlt, wobei eine stoffschlüssige Verbindung zwischen Schaumkern und Deckschichten gebildet wird. Als Deckschichten werden einerseits metallische Deckschichten, insbesondere aus Aluminium beschrieben. Alternativ werden auch Deckschichten aus faserverstärktem Kunststoff beschrieben. Dadurch, dass während des Umformschrittes die Deckschichten auf den Oberflächen des Schaumkerns verschoben werden können, erweist sich das beschriebene Verfahren insbesondere für die Herstellung nicht-planarer Verbundbauteile mit komplexer Form als vorteilhaft.

Ein gattungsgemässes Verbundbauteil und ein Verfahren zu dessen Herstellung sind in der WO 2006/133586 A1 beschrieben. Diese betrifft eine biegesteife Verbundplatte, umfassend:
A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. eine Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%.

Im beschriebenen Herstellungsverfahren wird die verwendete Kernschicht als poröse Platte bereitgestellt, wobei diese, wie beispielsweise in der WO 2006/105682 A1 beschrieben, durch trockenes Vermischen von Polypropylenfasern und Glasfasern, Vernadeln des Mischvlieses und Heissverpressen hergestellt werden kann. Als Deckschichten werden herkömmliche Glasfasermatten-Thermoplast-Platten (üblicherweise als "GMT-Platten" bezeichnet) bereitgestellt. Die Verstärkungsfasern der Deckschichten wie auch der Kernschichten werden bereits vor der Herstellung der biegesteifen Verbundplatte durch einen vorgelagerten Aufheiz- und Pressprozess mit Thermoplasten imprägniert und in der Folge als biegesteife Plattenelemente zwischengelagert. Zur Herstellung der eigentlichen Verbundplatte werden dann die zu verpressenden Schichten in Form von Platten vorgelegt, in einer Presse aufeinander gestapelt und bei Temperaturen zwischen 180 und 220°C während 5 bis 50 min verpresst. Die beschriebenen Verbundplatten werden insbesondere als Trennwände und Schalungselemente im Bauwesen, aber auch im Möbelbau als Ersatz für Spanplatten eingesetzt.

Zur Herstellung eines biegesteifen Verbundbauteils mit dem oben beschriebenen Verfahren, bei welchem die Deck- und Kernschichten als bereits konsolidierte und steife Platten bereitgestellt werden, sind insgesamt neun Prozessschritte erforderlich, nämlich:
- Bereitstellung der Kernschicht(en): 1) Vliesstoffherstellung, 2) Imprägnation der Verstärkungsfasern in einer Heizpresse (unter Druck & Temperatur), 3) Konsolidierung in einer Kühlpresse;
- Bereitstellung der Deckschichten: 1) Mattenherstellung, 2) Extrusion, 3) Imprägnation in einer Heizpresse, 4) Konsolidierung in einer Kühlpresse;
- Herstellung der Verbundplatte: 1) Aufheizen der Decklagen und Kernlagen in einer Heizpresse, 2) Abkühlen der Deck- & Kernlagen.

Die DE 195 20 477 A1 beschreibt faserverstärkte GMT-Platten, die aufgrund der Rückstellkräfte der Glasmatten beim Erhitzen expandieren und in ungleichmässiger Verteilung Luftblasen enthalten. Zur Herstellung dieser GMT-Platten werden vorerst entsprechende Glasmatten produziert werden. Anschliessend werden die Glasmatten mit schichtweise extrudierter Polypropylenschmelze bzw. mit Polypropylenfolien in einer Heizpresse imprägniert und anschliessend in einer Kühlpresse konsolidiert Die so hergestellten GMT Platten werden nach dem Konsolidieren bei Bedarf erneut erwärmt, um die gewünschte Expansion zu bewirken. Die expandierten GMT-Platten können als Stützkern zusammen mit Deckschichten zu einem Sandwich-Formteil verpresst werden. Das in der DE 195 20 477 A1 beschriebene Herstellungsverfahren beruht auf dem thermischen Verpressen eines auf Raumtemperatur abgekühlten und demzufolge erstarrten Stützkerns zusammen mit äusseren Schichten in Form von nicht expandierten GMT-Folien.

Zur Herstellung eines biegesteifen Verbundbauteils mit dem Verfahren der DE 195 20 477 A1 sind sogar zwölf Prozessschritte erforderlich, nämlich:
- Bereitstellung der Kernschicht(en): 1) Mattenherstellung, 2) Extrusion der Schmelzeschicht auf Matten, 3) Imprägnation der Verstärkungsfasern in einer Heizpresse (unter Druck & Temperatur), 4) Konsolidierung in einer Kühlpresse, 5) Aufheizung der konsolidierten Kernschichten, sodass sie expandieren, 6) Abkühlung der Kernschichten;
- Bereitstellung der Deckschicht(en): 1) Mattenherstellung, 2) Extrusion, 3) Imprägnation in einer Heizpresse, 4) Konsolidierung in einer Kühlpresse;
- Herstellung der Verbundplatte: 1) Aufheizen der Deckschichten, 2) Verpressen der Deckschichten mit kalter Kernschicht; deshalb ist die Herstellung auf flache Platten beschränkt, für 3D Teile müssten die Kerne vorgängig in einem weiteren Schritt entsprechend umgeformt und anschliessend mit Decklagen verpresst werden.

Ein weiteres Verfahren zur Herstellung eines faserverstärkten flächigen Verbundbauteils ist in der WO 2018/185090 A1 beschrieben, wobei dort sowohl für die Kernlage als auch für die Decklagen von nicht-konsolidierten Lagen aus Verstärkungsfasern und aus thermoplastischen Fasern ausgegangen wird. Diese Lagen werden dann erst anlässlich des Verpressens zum Verbundteil konsolidiert.

Nach wie vor besteht ein erheblicher Bedarf für weitere, insbesondere auch biegesteife, flächige und nach Bedarf dreidimensional geformte Verbundbauteile bzw. für entsprechende, einfache und wirtschaftliche Herstellungsverfahren. Insbesondere sind Verfahren zur Herstellung von Verbundbauteilen erwünscht, deren Eigenschaften für bestimmte Anwendungen deutlich verbessert sind.

### Darstellung der Erfindung

Eine Aufgabe der Erfindung ist es demnach, ein Verfahren zur Herstellung eines thermoplastisch verformbaren faserverstärkten flächigen Halbzeugs mit Verbundstruktur (A-B-A') oder (A-B) anzugeben.

Gelöst werden diese Aufgaben durch die in den Ansprüchen 11 definierten Herstellungsverfahren.

Vorteilhafte Ausgestaltungen der Erfindung sind nachfolgend beschrieben und in den abhängigen Ansprüchen definiert.

Gemäss einem ersten Aspekt der Erfindung wird ein Verfahren zur Herstellung eines thermoplastisch verformbaren faserverstärkten flächigen Halbzeugs mit einer Verbundstruktur (A-B-A') oder (A-B) angegeben. Das besagte Halbzeug umfasst:
- eine Kernlage (B) aus einem porösen Verstärkungsfaser-Thermoplastmaterial, mit einem Flächengewicht von 300 bis 3'000 g/m², einem Faseranteil von 20 bis 60 Gew.-% und einem Gehalt an Luftporen von 5 bis 80 Vol.%, insbesondere 10 bis 50 Vol.-%, sowie
- eine oder zwei stoffschlüssig mit der Kernlage (B) verbundene Decklagen (A, A') aus einem mit Thermoplast imprägnierten Verstärkungsfaser-Gewebe oder -Gelege, wobei jede Decklage eine Dicke von 0.2 bis 2.5 mm, ein Flächengewicht von 200 bis 4'000 g/m² und einen Luftporengehalt von weniger als 3 Vol.-% aufweist.

Das erfindungsgemässe Verfahren umfasst die folgenden Verfahrensschritte:
a) auf einen Kernlagenvorgänger in Form eines flächigen porösen Verstärkungsfaser-Thermoplastmaterials mit einem Flächengewicht von 300 bis 3'000 g/m², einem Faseranteil von 20 bis 60 Gew.-% und einem Gehalt an Luftporen von 20 bis 80 Vol.% werden ein- oder beidseitig jeweils mindestens ein Verstärkungsfaser-Gewebe bzw. - Gelege mit einem Flächengewicht von 100 bis 1'000 g/m² sowie eine im Vergleich zum Thermoplastmaterial des Kernlagenvorgängers niedrigviskose Thermoplastschicht mit einem Flächengewicht von 50 bis 1'000 g/m² aufgebracht,
b) die derart gebildete Lagenstruktur (A-B) bzw. (A-B-A') wird aufgeheizt und verpresst derart, dass der Thermoplast der niedrigviskose Thermoplastschicht aufgeschmolzen und in die aufgebrachten Verstärkungsfaser-Gewebe bzw. -Gelege sowie in die Kernlage eindringt und nach Abkühlen eine stoffschlüssige Verbindung von Kernlage und Decklage bildet;
wobei optional ein weiterer Aufheiz- und Verpressungsvorgang erfolgt.

Zum Schritt a) ist anzumerken, dass ein- oder beidseitig durchaus mehrere, beispielsweise je vier Verstärkungsfaser-Gewebe bzw. -Gelege mit jeweils einem Flächengewicht von 100 bis 1'000 g/m² aufgebracht werden können, wodurch das Flächengewicht der daraus gebildeten Decklage entsprechend erhöht wird.

Zum Schritt b) ist anzumerken, dass beim Aufheizen insbesondere die niedrigviskose Thermoplastschicht, aber durchaus auch das Thermoplastmaterial des Kernlagenvorgängers aufgeschmolzen werden. Der aufgeschmolzene Thermoplast der niedrigviskosen Thermoplastschicht wird durch den angelegten Pressdruck in die Kernlage gedrängt. Dieser Vorgang wird dadurch begünstigt, dass der Thermoplast der niedrigviskosen Thermoplastschicht eine Viskosität aufweist, die geringer ist als diejenige des Thermoplastmaterials des Kernlagenvorgängers.

Gemäss einem weiteren Aspekt der Erfindung wird ein Verfahren zur Herstellung eines flächigen Verbundbauteils angegeben. Dabei wird ein thermoplastisch verformbares faserverstärktes flächiges Halbzeug gemäss dem erfindungsgemässen Verfahren hergestellt und zugeschnitten und der so gebildete Zuschnitt über den Schmelzpunkt des Thermoplasten erwärmt und in einem Formwerkzeug in das flächige Verbundbauteil umgeformt.

Der hier in der Einzahl verwendete Begriff "Thermoplast" setzt nicht zwangsläufig voraus, dass das in Form von Fasern, Folien oder letztlich als Matrix vorliegende Thermoplastmaterial in sämtlichen Lagen nur aus einem Thermoplastmaterial gebildet ist. Insbesondere können auch Mischfasern aus unterschiedlichen, aber kompatiblen Thermoplasten zum Einsatz kommen. Als "kompatibel" werden Thermoplasten verstanden, die eine stoffschlüssige Verbindung erlauben.

Der Begriff "niedrigviskose Thermoplastschicht" bezieht sich auf eine Schicht eines Thermoplastmaterials, dessen Viskosität erheblich geringer ist als die Viskosität des Thermoplastmaterials des Kernlagenvorgängers. Dadurch lässt sich erreichen, dass das Thermoplastmaterial der niedrigviskosen Thermoplastschicht leicht durch das Verstärkungsgewebe der Decklagen hindurch bis hinein in den Kernlagenvorgänger gedrängt wird während gleichzeitig das Thermoplastmaterial des Kernlagenvorgängers vergleichsweise wenig wandert. Die Viskosität von Thermoplasten wird üblicherweise anhand des Schmelzflussindexes MFI charakterisiert. Der Schmelzflussindex MFI (230°C, 2.16 kg) nach DIN 53735, liegt im Fall von Polypropylen im Bereich von 50 bis 1'200 g/10 min, vorzugsweise 100 bis 400 g/10 min.

Es versteht sich, dass im Hinblick auf das vorgesehene Verpressen der Begriff "aufgeheizt" dahingehend zu verstehen ist, dass eine zur thermoplastischen Umformung geeignete Temperatur vorliegt. Demnach sollen also alle zur Umformung vorgesehenen Thermoplastbereiche auf eine Temperatur aufgeheizt werden, die etwas oberhalb der jeweiligen Thermoplast-Schmelztemperatur liegt.

Je nach verwendetem Thermoplastmaterial erfolgt das Verpressen zu einem Verbundbauteil bei entsprechenden Temperaturen, welche bei Verwendung von Polypropylen im Bereich von ca. 180ºC liegen und bei Drücken von 1 bis 100 bar.

Die erfindungsgemäss hergestellten flächigen Verbundbauteile werden aufgrund ihrer Schichtanordnung auch als "Sandwich-Bauteile" bezeichnet. Solche Bauteile können als ebene oder gebogene Platten, aber auch als Bauteile mit unterschiedlichen Dicken und Verformungsgraden ausgebildet sein. Sie zeichnen sich durch eine widerstandsfähige, vergleichsweise harte und steife Aussenschicht und eine voluminösen, schall- und wärmeisolierende Innenschicht mit vergleichsweise geringer Dichte aus. Dementsprechend sind die Bauteile für eine gegebene Steifheit vergleichsweise leicht.

Das als poröser Kernlagenvorgänger vorgesehene flächige poröse Verstärkungsfaser-Thermoplastmaterial ist grundsätzlich bekannt. Gemäss einer vorteilhaften Ausführungsform wird der Kernlagenvorgänger in einem textilen Vliesverfahren bereitgestellt (Anspruch 2). Ein solches Verfahren ist beispielsweise in der WO 2006/105682 A1 beschrieben und beruht auf trockenem Vermischen von Verstärkungsfasern und Thermoplastfasern, Vernadeln des Mischvlieses und Heissverpressen desselben.

Vorteilhafterweise handelt es sich bei den Verstärkungsfasern im Kernlagenvorgänger um ungerichtete, miteinander vernadelte Fasern einer mittleren Länge (Gewichtsmittel) von 10 bis 60 mm (Anspruch 3).

Die niedrigviskose Thermoplastschicht wird vorzugsweise als dünne Folie oder als Pulver aufgebracht (Anspruch 4), wobei in einer Ausführungsform die aufzubringende Folie in flüssiger Form, insbesondere durch Extrusion, zugeführt wird. Damit wird im anschliessenden Aufheiz- und Verpressungsvorgang die erwünschte Imprägnierung der angrenzenden Decklage (A bzw. A') erreicht.

Gemäss einer Ausführungsform (Anspruch 5) erfolgt das Aufheizen und Verpressen kontinuierlich. Dabei wird die anfänglich gebildete Lagenstruktur (A-B) oder (A-B-A') kontinuierlich (in-Line) einem Laminator zugeführt. Dort wird der Thermoplast aufgeschmolzen und unter Druck die Verstärkungsfasern im Kern und in den Decklagen imprägniert.

Alternativ kann das Aufheizen und Verpressen diskontinuierlich erfolgen (Anspruch 6), indem jeweils flächige Zuschnitte nacheinander in ein Presswerkzeug gebracht und verarbeitet werden.

Je nach Anwendungsbereich kann der so hergestellte Verbund in einem zweiten Aufheiz- und Konsolidierungsschritt noch einmal über die Schmelztemperatur des Thermoplasten erwärmt werden (Anspruch 7), was zu einem Aufstellen (Loften) der Kernlage führt. Der geloftete Verbund kann dann auf eine gewünschte Wandstärke gepresst werden. Alternativ kann der zweite Aufheiz- und Konsolidierungsschritt auch dazu genutzt werden, um auf den Sandwichverbund Decklagen wie zum Beispiel Vliese, Klebefilme oder (Dekor-) Folien zu laminieren (Anspruch 8).

Grundsätzlich steht für das erfindungsgemässe Verfahren, eine ganze Reihe von erprobten Thermoplasten zur Verfügung, deren Auswahl im Bereich des Fachwissens liegt. Gemäss einer vorteilhaften Ausführungsform (Anspruch 9) ist der Thermoplast ausgewählt aus Polypropylen (PP), Polyamid (PA) und Polyethylenterephthalat (PET).

Auch für die Auswahl der Verstärkungsfasern steht eine ganze Reihe von erprobten Fasermaterialien zur Verfügung. Gemäss einer vorteilhaften Ausführungsform (Anspruch 10) sind die Verstärkungsfasern ausgewählt aus Carbonfasern, Glasfasern, Aramidfasern, Basaltfasern und temperaturstabile Synthesefasern. Der letztgenannte Begriff umfasst auch Fasern aus einem Thermoplasten mit einem oberhalb der im erfindungsgemässen Heiz- und Pressvorgang verwendeten Arbeitstemperaturen liegenden Schmelzpunkt. Es entspricht dem Fachwissen, dass der Begriff "temperaturstabile Faser" im vorliegenden Zusammenhang im Vergleich mit den verwendeten Thermoplastmaterialien zu verstehen ist. Für die Verwendung zusammen mit dem vergleichsweise niedrigschmelzenden Polypropylen sind Fasern mit einem Schmelzpunkt oberhalb von 200ºC als temperaturstabil zu verstehen.

Es versteht sich, dass die Auswahl der Thermoplaste wie auch der Fasermaterialien, und entsprechend auch die Kombination von Thermoplast und Fasermaterial stark durch den Anwendungsbereich des herzustellenden Bauteils geprägt sind.

Mit dem erfindungsgemässen Verfahren zur Herstellung eines flächigen Verbundbauteils lassen sich beispielsweise biegesteife Sandwichbauteile herstellen, die im wesentlichen planar sind. Gemäss einer Ausführungsform des Verfahrens (Anspruch 12), werden mittels entsprechend gebildeter Presswerkzeuge Sandwichbauteile mit lokal unterschiedlicher Dicke, d.h. 3-dimensional strukturierte flächige Verbundbauteile unterschiedlichster Art, hergestellt.

### Kurze Beschreibung der Zeichnungen

Ausführungsbeispiele der Erfindung werden nachfolgend anhand der Zeichnungen näher beschrieben, dabei zeigen:
- Fig. 1: den Lagenaufbau eines erfindungsgemäss hergestellten thermoplastisch verformbaren faserverstärkten flächigen Halbzeugs, als Schnittdarstellung;
- Fig. 2: eine Anlage zur Durchführung des erfindungsgemässen Verfahrens;
- Fig. 3: einen Abschnitt des als Sandwichverbund vorliegenden Halbzeugs;
- Fig. 4: ein flächiges Verbundbauteil, in fotografischer Darstellung; und
- Fig. 5: einen Ausschnitt des flächigen Verbundbauteils der Fig. 4, in fotografischer Darstellung.

### Wege zur Ausführung der Erfindung

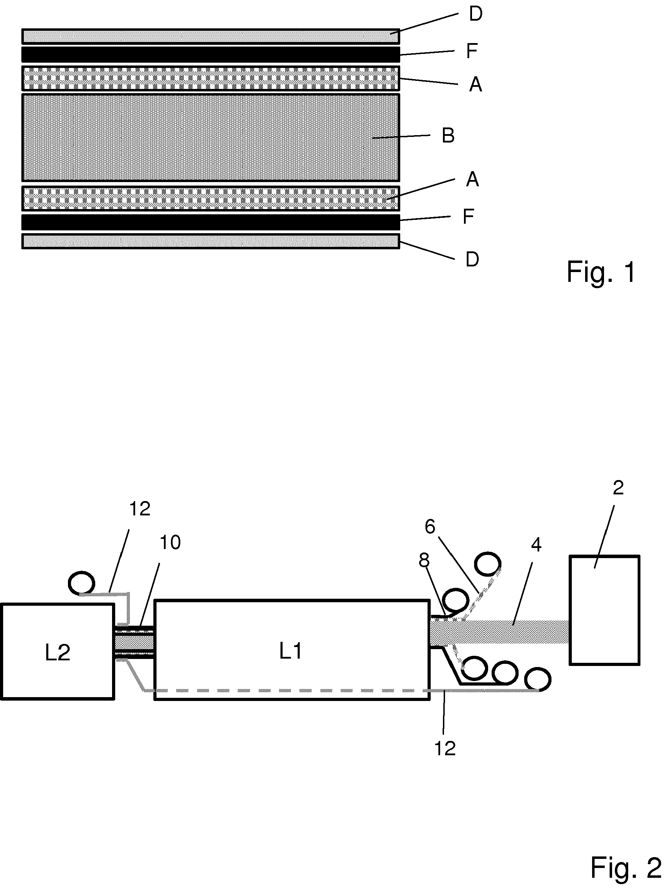

Das in der Fig. 1 dargestellte thermoplastisch verformbare faserverstärkte flächige Halbzeug weist eine symmetrische Verbundstruktur (A-B-A') auf. Diese umfasst eine Kernlage (B) aus einem porösen Verstärkungsfaser-Thermoplastmaterial sowie zwei stoffschlüssig damit verbundene Decklagen (A, A') aus einem mit Thermoplast imprägnierten Verstärkungsfaser-Gewebe. Im hier gezeigten Beispiel sind die beiden Decklagen identisch, d.h. es liegt eine symmetrische Verbundstruktur (A-B-A) vor. Typischerweise umfasst jede Decklage mehrere, typischerweise zwei bis vier übereinander gestapelte, vorzugsweise identische Verstärkungsfaser-Gewebe bzw. -Gelege.

Die beiden Decklagen A liegen im Halbzeug direkt auf der Kernlage auf und sind je mit einer niedrigviskosen Thermoplastschicht in Form eines Films (F) belegt. Im gezeigten Beispiel ist an der Aussenseite des Thermoplastfilms ein Dekorfilm (D) aufgebracht.

Eine Anlage zur kontinuierlichen Durchführung des Verfahrens ist in der Fig. 2 dargestellt, wobei die Verarbeitungsrichtung grundsätzlich von rechts nach links läuft. Auf einen aus einer Vernadelungsvorrichtung 2 austretenden Kernlagenvorgänger 4 wird beidseitig ein Verstärkungsfasergewebe oder -gelege 6 und ein hochviskoser Thermoplastfilm 8 aus entsprechenden Vorratsrollen abgelegt. Die so gebildete Lagenstruktur wird einem ersten Laminator L1 zugeführt und dort aufgeheizt und verpresst zu einem Verbund 10.

Im gezeigten Beispiel erfolgt noch ein weiterer Aufheiz- und Verpressungsvorgang in einem zweiten Laminator L2. Dort werden auch beidseitig je eine Decklage 12 aufgebracht.

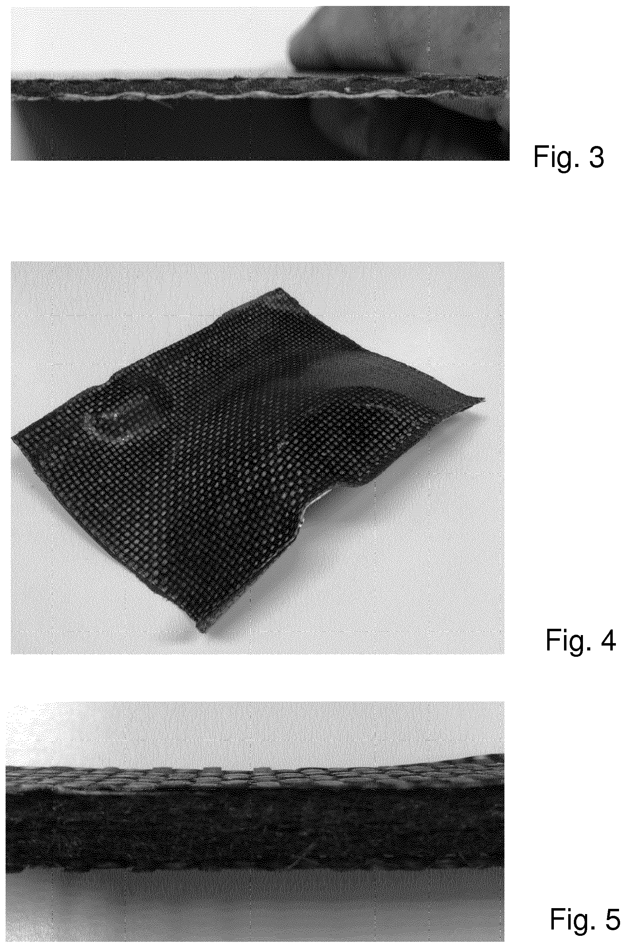

Ein erfindungsgemäss hergestelltes Verbundbauteil ist in den Fig. 3 bis 5 dargestellt.

## Patentansprüche

1. Verfahren zur Herstellung eines thermoplastisch verformbaren faserverstärkten flächigen Halbzeugs mit Verbundstruktur (A-B-A') oder (A-B), umfassend:
- eine Kernlage (B) aus einem porösen Verstärkungsfaser-Thermoplastmaterial, mit einem Flächengewicht von 300 bis 3'000 g/m², einem Faseranteil von 20 bis 60 Gew.-% und einem Gehalt an Luftporen von 5 bis 80 Vol.%, sowie
- eine oder zwei stoffschlüssig mit der Kernlage (B) verbundene Decklagen (A, A') aus einem mit Thermoplast imprägnierten Verstärkungsfaser-Gewebe oder - Gelege, wobei jede Decklage eine Dicke von 0.2 bis 2.5 mm, ein Flächengewicht von 200 bis 4'000 g/m² und einen Luftporengehalt von weniger als 3 Vol.-% aufweist,
**gekennzeichnet durch** folgende Verfahrensschritte:
- auf einen Kernlagenvorgänger in Form eines flächigen porösen Verstärkungsfaser-Thermoplastmaterials mit einem Flächengewicht von 300 bis 3'000 g/m², einem Faseranteil von 20 bis 60 Gew.-% und einem Gehalt an Luftporen von 20 bis 80 Vol.% werden ein- oder beidseitig jeweils mindestens ein Verstärkungsfaser-Gewebe bzw. -Gelege mit einem Flächengewicht von 100 bis 1'000 g/m² sowie eine im Vergleich zum Thermoplastmaterial des Kernlagenvorgängers niedrigviskose Thermoplastschicht mit einem Flächengewicht von 50 bis 1'000 g/m² aufgebracht,
- die derart gebildete Lagenstruktur (A-B) bzw. (A-B-A') wird aufgeheizt und verpresst derart, dass der Thermoplast der niedrigviskosen Thermoplastschicht aufgeschmolzen und in die aufgebrachten Verstärkungsfaser-Gewebe bzw. - Gelege sowie in die Kernlage eindringt und nach Abkühlen eine stoffschlüssige Verbindung von Kernlage und Decklage bildet;
gegebenenfalls gefolgt durch einen weiteren Aufheiz- und Verpressungsvorgang.

2. Verfahren nach Anspruch 1, wobei der Kernlagenvorgänger in einem textilen Vliesverfahren bereitgestellt wird.

3. Verfahren nach Anspruch 2, dass die Verstärkungsfasern im Kernlagenvorgänger ungerichtete, miteinander vernadelte Fasern einer mittleren Länge (Gewichtsmittel) von 10 bis 60 mm sind.

4. Verfahren nach einem der Ansprüche 1 bis 3, wobei die niedrigviskoseThermoplastschicht als Folie oder Pulver aufgebracht wird.

5. Verfahren nach einem der Ansprüche 1 bis 4, wobei das Aufheizen und Verpressen kontinuierlich erfolgt.

6. Verfahren nach einem der Ansprüche 1 bis 4, wobei das Aufheizen und Verpressen diskontinuierlich erfolgt.

7. Verfahren nach einem der Ansprüche 1 bis 6, wobei in dem weiteren Aufheiz- und Verpressungsvorgang zunächst ein Aufschmelzen des Thermoplasten mit einher gehendem Expandieren der Kernlage und anschliessend ein Verpressen auf eine vordefinierte Verbunddicke erfolgt.

8. Verfahren nach einem der Ansprüche 1 bis 6, wobei in dem weiteren Aufheiz- und Verpressungsvorgang mindestens eine weitere Decklage aufgebracht wird.

9. Verfahren nach einem der Ansprüche 1 bis 8, wobei der Thermoplast ausgewählt ist aus PP, PA und PET.

10. Verfahren nach einem der Ansprüche 1 bis 9, wobei die Verstärkungsfasern ausgewählt sind aus Carbonfasern, Glasfasern, Aramidfasern, Basaltfasern und temperaturstabile Synthesefasern.

11. Verfahren zur Herstellung eines flächigen Verbundbauteils, wobei ein thermoplastisch verformbares faserverstärktes flächiges Halbzeug gemäss dem Verfahren nach einem der vorgenannten Ansprüche hergestellt und zugeschnitten wird und wobei der so gebildete Zuschnitt über den Schmelzpunkt des Thermoplasten erwärmt und in einem Formwerkzeug in das flächige Verbundbauteil umgeformt wird.

12. Verfahren nach Anspruch 11, wobei das flächige Verbundbauteil mit lokal unterschiedlichen Dicken gebildet wird.

## Claims

1. A method for producing a thermoplastically moldable fiber reinforced planar semifinished product having a composite structure (A-B-A') or (A-B), comprising:
- a core layer (B) made of a porous reinforcing-fibers thermoplastic material having an areal weight of 300 to 3'000 g/m², a fiber content of 20 to 60 wt.-% and an air voids content of 5 to 80 vol.-%, and
- one or two cover layers (A, A') made of a woven or nonwoven reinforcing fiber fabric which are impregnated with a thermoplastic and which are integrally bonded to the core layer (B), wherein each cover layer has a thickness of 0.2 to 2.5 mm, an areal weight of 200 to 4'000 g/m² and an air voids content of less than 3 vol.-%,
**characterized by** the following process steps:
- to one or both sides of a core layer precursor in the form of a flat, porous reinforcing-fibers thermoplastic material having an areal weight of 300 to 3'000 g/m², a fiber content of 20 to 60 wt.-% and an air voids content of 20 to 80 vol.-%, applying at least one woven or nonwoven reinforcing fiber fabric having an areal weight of 100 to 1'000 g/m² and a thermoplastic layer having a low viscosity compared with the thermoplastic material of the core layer precursor and having an areal weight of 50 to 1'000 g/m²,
- the layer structure (A-B) or (A-B-A') thus formed is heated and pressed in such manner that the thermoplastic of the low viscosity thermoplastic layer is melted and penetrates into the applied woven or nonwoven reinforcing fiber fabric and into the core layer and, after cooling, forms an integral bond of the core layer and the cover layer;
optionally followed by a further heating and pressing process.

2. The method according to claim 1, wherein the core layer precursor is provided in a textile nonwoven process.

3. The method according to claim 2, wherein the reinforcing fibers in the core layer precursor are nondirectional fibers needled to each other and having an average length (weight average) of 10 to 60 mm.

4. The method according to one of claims 1 to 3, wherein the low viscosity thermoplastic layer is applied as a foil or as a powder.

5. The method according to one of claims 1 to 4, wherein the heating and pressing are carried out continuously.

6. The method according to one of claims 1 to 4, wherein the heating and pressing are carried out discontinuously.

7. The method according to one of claims 1 to 6, wherein, during the further heating and pressing process, the thermoplastic is initially melted with concomitant expansion of the core layer and then pressed to reach a predefined composite thickness.

8. The method according to one of claims 1 to 6, wherein, during the further heating and pressing process, at least one further cover layer is applied.

9. The method according to one of claims 1 to 8, wherein the thermoplastic is selected from PP, PA and PET.

10. The method according to one of claims 1 to 9, wherein the reinforcing fibers are selected from carbon fibers, glass fibers, aramid fibers, basalt fibers and temperature-stable synthetic fibers.

11. A method for producing a planar composite component, wherein a thermoplastically moldable fiber reinforced planar semifinished product is produced by a method according to one of the preceding claims and is subsequently cut to a blank, and wherein the blank thus formed is heated above the melting point of the thermoplastic and is formed to a planar composite component in a mold.

12. The method according to claim 11, wherein the planar composite component is formed with locally different thicknesses.

## Revendications

1. Procédé de fabrication d'un semi-produit plan renforcé par des fibres, déformable, en manière thermoplastique ayant une structure composite (A-B-A') ou (A-B), comprenant :
- une couche centrale (B) en une matière thermoplastique poreuse renforcée par des fibres ayant un poids surfacique de 300-3000 g/m², une teneur en fibres de 20 à 60 % pondéraux et une teneur en cavités de 5 à 80% volumiques ainsi que :
- une ou deux couches de couverture (A, A') reliées par une liaison par la matière à la couche centrale (B), ces couches étant en un tissu ou une répartition de fibres de renforcement imprégnées de matière thermoplastique, chaque couche de couverture ayant une épaisseur de 0,2-2,5 mm, un poids surfacique de 200-4000 g/m² et une teneur en cavités inférieure à 3% volumiques,
procédé **caractérisé par** les étapes suivantes consistant à :
- appliquer sur un précurseur de couche centrale sous la forme d'une matière thermoplastique renforcée de fibres, poreuse, plane, ayant un poids surfacique de 300-3000 g/m², une teneur en fibres de 20 à 60 % pondéraux et une teneur en cavités de 20-80 % volumiques sur une face ou sur deux faces d'au moins un tissu ou une répartition de fibres de renforcement ayant un poids surfacique de 100-1000 g/m² et une couche thermoplastique à faible viscosité, par comparaison avec le précurseur de couche centrale en matière thermoplastique, et ayant un poids surfacique de 50-1000 g/m²,
- chauffer la structure de couches (A-B) ou (A-B-A') ainsi formée et comprimer pour faire fondre la matière thermoplastique de la couche thermoplastique à faible viscosité et la faire pénétrer ainsi dans les tissus ou répartitions de fibres de renforcement appliquées et dans la couche centrale et après refroidissement, former une liaison par la matière de la couche centrale et de la couche de couverture,
suivi, le cas échéant, par une autre opération de mise en température et compression.

2. Procédé selon la revendication 1,
selon lequel
le précurseur de couche centrale est obtenu par un procédé de textiles non-tissés.

3. Procédé selon la revendication 2,
**caractérisé en ce que**
les fibres de renforcement du précurseur de couche centrale sont des fibres aiguilletées entre elles et ayant une longueur moyenne (moyenne pondérale) de 10-60 mm.

4. Procédé selon l'une des revendications 1 à 3,
selon lequel
la couche thermoplastique à faible viscosité est appliquée sous la forme d'un film ou d'une poudre.

5. Procédé selon l'une des revendications 1 à 4,
selon lequel
le chauffage et la compression se font en continu.

6. Procédé selon l'une des revendications 1 à 4,
selon lequel
le chauffage et la compression se font de manière discontinue.

7. Procédé selon l'une des revendications 1 à 6,
selon lequel
dans une autre opération de mise en température et de compression, on fait tout d'abord fondre la matière thermoplastique avec expansion correspondante de la couche centrale puis on comprime à une épaisseur de composite prédéfinie.

8. Procédé selon l'une des revendications 1 à 6,
selon lequel
dans l'autre opération de mise en température et de compression, on applique au moins une autre couche de couverture.

9. Procédé selon l'une des revendications 1 à 8,
selon lequel
on sélectionne la matière thermoplastique parmi PP, PA et PET.

10. Procédé selon l'une des revendications 1 à 9,
selon lequel
on sélectionne les fibres de renforcement parmi les fibres de carbone, les fibres de verre, les fibres aramides, les fibres de basalte et les fibres de synthèse, stables en température.

11. Procédé de réalisation d'une pièce composite surfacique,
selon lequel
on réalise et on découpe un produit semi-fini, thermoplastique renforcé de fibres, déformable, selon le procédé de l'une des revendications précédentes, et
on met en température la pièce découpée ainsi formée, au-dessus du point de fusion de la matière thermoplastique et on transforme dans un outil de formage en une pièce composite plate.

12. Procédé selon la revendication 11,
selon lequel
on réalise la pièce composite plate avec des épaisseurs localement différentes.
